# EUROPÄISCHE PATENTANMELDUNG

(11) **EP 1 424 754 A2**
(43) Veröffentlichungstag der Anmeldung: **02.06.2004**
(21) Anmeldenummer: 03025622.6
(22) Anmeldetag: 06.11.2003
(51) Int. Cl.: H02B 1/052

(54) **Haltevorrichtung und Gerät für Haltevorrichtung**

(30) Priorität: 27.11.2002 DE 10255490
(71) Anmelder: SIEMENS AKTIENGESELLSCHAFT, 80333 München (DE)
(72) Erfinder: Schneeberger, Reinhold, 90556 Seukendorf (DE)

(57) **Zusammenfassung**

Die vorliegende Erfindung betrifft eine Haltevorrichtung (1), ein Gerät (20) sowie ein Montagesystem für Geräte (20,50), auch mit höherem Gewicht, bei dem die einzelnen Teile mit einfachem Werkzeug befestigt werden können. Dabei werden die Geräte (20,50) in eine Haltevorrichtung (1) eingehängt und mittels Befestigungsmittel an der Haltevorrichtung (1) fixiert. Die Haltevorrichtung (1) weist dabei zwei integrierte Kabelkanäle (12,13) auf, wodurch störbehaftete Kabel, wie z.B. Stromversorgungskabel getrennt von sensitiven Kabeln, beispielsweise Datenübertragungskabel, verlegt und vor Umwelteinflüssen geschützt werden können. Dazu ist die Haltevorrichtung (1) mit einer vorderen Platte (6) als Deckel zu versehen.

## Beschreibung

Die Erfindung betrifft eine Haltevorrichtung und ein Gerät für eine Haltevorrichtung.

Geräte, insbesondere elektrische und/oder elektronische Geräte, insbesondere Automatisierungsgeräte, beispielsweise speicherprogrammierbare Steuerungen (SPS), etc. werden beispielsweise als Baugruppen in Baugruppensystemen zusammengefasst und an ihrem Einsatzort befestigt. Dazu werden die Baugruppen in der Regel in ein Baugruppensystem eingeschoben und dort verriegelt, wobei jede der einzelnen Baugruppen in einem eigenen Gehäuse fixiert wird. Diese Geräte werden beispielsweise direkt an einer Montagewand befestigt, insbesondere geschraubt oder auf Normschienen wie z.B. C-/ oder Hut-Schienen aufgeschnappt. Diese einfachen Normschienen können allerdings nur Geräte mit geringem Gewicht halten. Darüber hinaus muss für die Verkabelung beispielsweise der Stromversorgung, sowie der digitalen bzw. analogen Ein-/Ausgänge der Geräte sowie eventuell zusätzlich benötigter Kommunikationskabel separate Kabelkanäle angebracht werden. Zur Trennung störbehafteter Kabel, wie z.B. Stromversorgungskabel, von sensitiven Kabeln, beispielsweise Kabeln zur Übertragung von Daten, aber auch zum Schutz der Kabel vor widrigen Umweltbedingungen müssen ggf. weitere aufwändige und kostenintensive Zusatzmaßnahmen getroffen werden.

Des Weiteren sind zur elektrischen Verbindung von einzelnen Geräten, beispielsweise kommunikationstechnische Verbindungen, weitere Kabelverbindungen, z.B. Busleitungen, notwendig, die wiederum ein hohes Störanfälligkeitspotenzial aufweisen und dadurch den Wartungsaufwand unverhältnismäßig erhöhen können.

Aus der DE 197 26 748 C2 ist ein Kleingehäuse für den Wandanbau mit einem Gehäuseunterteil bekannt, welches mit einer Abdeckung überdeckbar ist. Dabei ist das Gehäuseunterteil als flächiges Strangpressprofil ausgebildet und weist Führungsund/oder Befestigungsnuten auf, die in das Gehäuseunterteil eingeformt sind und in den Gehäuseinnenraum gerichtet sind.

Aus der deutschen Auslegeschrift 21 63 719 ist ein Montagerahmen für Elektroinstallationszwecke bekannt, der nebeneinander liegende fensterartige Öffnungen zur Aufnahme elektrischer Installationsgeräte aufweist und an dessen Vorderseite eine metallische Abdeckung anzuordnen ist.

Aus der Übersetzung der europäischen Patentschrift EP 0 311 654 B1, der DE 38 79 353 T2 ist eine Vorrichtung zur Verbindung von vielen, vorzugsweise trägerähnlichen Profilen für elektrische Kabelleitung- oder Kanalsysteme, mit mindestens einem Paar parallel verlaufender und gegenüberliegend angeordneter Nuten, in die ein Profilverbindungselement zur Überbrückung der Verbindungsstelle und damit zur Fertigstellung der Verbindung einpassbar ist, bekannt.

Der Erfindung liegt daher die Aufgabe zugrunde, eine Haltevorrichtung für ein Gerät, ein Gerät sowie ein System bestehend aus einer Haltevorrichtung und wenigstens einem Gerät anzugeben, welche den Zusammenbau, die Befestigung sowie den Schutz der einzelnen Komponenten erleichtert und verbessert.

Diese Aufgabe wird durch die Merkmale der unabhängigen Patentansprüche 1, 14 und 23 gelöst. Bevorzugte Weiterbildungen sind in den abhängigen Ansprüchen angegeben. Dabei stellt die erste Hälfte der Platte den Teil der Platte dar, der sich bei Anbringung der Platte an einer Aufnahme, beispielsweise einer Wand, im oberen Bereich der Platte, bezogen auf die Anbringung der Platte an der Aufnahme, beispielsweise einer Wand, befindet. Die erste Hälfte der Platte wird somit im Folgenden auch als obere Hälfte der Platte bezeichnet. Analog dazu wird die zweite Hälfte der Platte im Folgenden auch als untere Hälfte der Platte bezeichnet.

Die Verwendung der Begriffe "obere" bzw. "untere" bzw. Ableitungen von diesen Begriffen in Verbindung mit anderen Merkmalen der Erfindung beziehen sich im Folgenden auf die gleiche räumliche Anordnung bezüglich der Anbringung an einer Aufnahme, beispielsweise Wand, wie bei der Definition der ersten und der zweiten Hälfte der Platte beschrieben.

Nach einer bevorzugten Ausführungsform der Erfindung weist die Haltevorrichtung eine obere Abdeckung und/oder eine untere Abdeckung auf, wobei die obere und/oder die untere Abdeckung mit der Platte verbunden sind. Durch die obere und die untere Abdeckung, die mit der Platte verbunden sind, kann die Haltevorrichtung sehr einfach mit einer weiteren Platte als Deckel versehen werden, die die Haltevorrichtung bei Bedarf durch Ergänzung einfach herzustellender Stanzteile auf den beiden Stirnseiten zu einem Gehäuse erweitert und damit den Schutz der Bauteile, die im Inneren des Gehäuses liegen, vor Umwelteinflüssen gewährleistet.

Nach einer weiteren bevorzugten Ausführungsform der Erfindung ist das Profil rechtwinklig ausgebildet, wobei ein erster Profilsteg parallel zur Platte in Richtung auf die untere Abzeigt. Darüber hinaus weist das Profil einen zweiten Profilsteg auf, wobei der zweite Profilsteg parallel zur Platte auf die obere Abdeckung zeigt. Besonders vorteilhaft ist, dass der zweite Profilsteg des Profils am Ende des Profils angeordnet ist. Durch den ersten Profilsteg, der parallel zur Platte in Richtung auf die untere Abdeckung zeigt, entsteht ein Zwischenraum zwischen der Platte und dem ersten Profilsteg derart, dass ein Gerät mit einem dazu passenden Gerätesteg ohne weitere Hilfsmittel in diesen Zwischenraum eingeführt und eingeklemmt werden kann. Das in das Profil eingehängte Gerät befindet sich dann unterhalb des Profils. Durch den zweiten Profilsteg, der parallel zur Platte in Richtung auf die obere Abdeckung zeigt, entsteht zwischen der Platte, dem zweiten Profilsteg und der oberen Abdeckung ein Kanal, der insbesondere zur Aufnahme von Kabeln, beispielsweise sensitiven Kabeln, sonstigen Kabeln, etc. geeignet ist. Besonders vorteilhaft ist, dass der zweite Profilsteg des Profils am Ende des Profils angeordnet ist, da dadurch der entstandene Kanal die größtmöglichen Ausmaße annimmt und bei Bedarf eine größere Anzahl von Kabelsträngen aufnehmen kann.

Nach einer besonders vorteilhaften Ausführungsform der Erfindung ist das Profil einstückig fertigbar. Durch die Einstückigkeit ist eine Massenfertigung und damit eine kostengünstige Fertigung möglich. Das Profil kann sich über die gesamte Breite der Platte erstrecken, jedoch ist es genauso möglich, jeweils gleich geformte Teile eines solchen Profils an geeigneten Stellen, beispielsweise in regelmäßigen Abständen auf der Platte anzubringen. Auf diese Weise ist nicht ein einziges Profil durchgängig auf der Platte angeordnet, sondern es sind jeweils gleich geformte Profilteile auf der Platte entsprechend verteilt.

Nach einer weiteren vorteilhaften Ausführungsform der Erfindung besteht die Befestigungsschiene aus zwei zueinander parallelen Schienen, die mit einem Abstand zueinander an der Platte befestigt sind. Durch eine solche Befestigungsschiene ist es sehr leicht möglich, zwischen den zwei einzelnen Schienen einen genormten Abstand herzustellen, der es sehr einfach ermöglicht, ein Gerät, welches auf der Befestigungsschiene aufliegt, mittels handelsüblicher Befestigungsmittel, beispielsweise Schrauben, in der Befestigungsschiene zu fixieren.

Nach einer weiteren überaus vorteilhaften Ausführungsform der Erfindung weist die Haltevorrichtung einen oberen Kanal auf, der durch die obere Abdeckung, die Platte und das Profil gebildet wird. Darüber hinaus weist die Haltevorrichtung einen unteren Kanal auf, der durch die untere Abdeckung, die Platte und ein eingehängtes Gerät gebildet wird. Weiterhin sind der obere Kanal und der untere Kanal jeweils als kabelführende Kanäle nutzbar. Durch eine solche erfindungsgemäße Anordnung der Haltevorrichtung, und ein hierin eingehängtes Gerät entstehen erfindungsbedingt automatisch zwei voneinander getrennte, sehr weit auseinander liegende Kanäle, die jeweils zur Aufnahme von Kabeln geeignet sind, wodurch eine Trennung beispielsweise von Kabeln zur Stromversorgung und Kabeln zur Übertragung von Daten sehr einfach möglich ist. Eine gegenseitige Beeinflussung, beispielsweise durch Störsignale der Stromversorgungskabel, die die fehlerfreie Datenübertragung negativ beeinflussen könnten, sind damit bei entsprechend sinnvoller Kabelführung bzw. Kabeltrennung weitgehend ausgeschlossen.

Nach einer weiteren vorteilhaften Ausführungsform.der Erfindung sind die obere Abdeckung und die untere Abdeckung jeweils abgewinkelt ausgebildet, wobei die obere Abdeckung einen ersten Steg aufweist, der im Wesentlichen senkrecht zur oberen Abdeckung, im Wesentlichen parallel zur Platte in Richtung auf die untere Abdeckung zeigt und an dem Ende der oberen Abdeckung angeordnet ist, welches nicht mit der Platte verbunden ist und wobei die untere Abdeckung einen zweiten Steg aufweist, der im Wesentlichen senkrecht zur unteren Abdeckung, im Wesentlichen parallel zur Platte in Richtung auf die obere Abdeckung zeigt und an dem Ende der unteren Abdeckung angeordnet ist, welches nicht mit der Platte verbunden ist. Durch diese Ausführungsform ist die Haltevorrichtung auf einfache und kostengünstige Weise zur Aufnahme einer vorderen Platte, die als Abdeckung bzw. Deckel dient, vorbereitet.

Nach einer weiteren äußerst vorteilhaften Ausführungsform der Erfindung ist die Haltevorrichtung einstückig als Aluminiumstrangpressprofil ausführbar. Die Haltevorrichtung kann so kostengünstig als Massenprodukt in beliebiger Länge produziert werden und entsprechend den Anforderungen sehr einfach auf die gewünschte Länge zugeschnitten werden. Es ergeben sich insbesondere Kostenvorteile dadurch, dass das Profil sowie die Befestigungsschiene nicht separat an der Platte, beispielsweise mittels Schweißen, Kleben, etc. angebracht werden müssen.

Nach einer weiteren vorteilhaften Ausführungsform der Erfindung weist die Haltevorrichtung eine vordere Platte auf, die zusammen mit der Platte und der oberen und der unteren Abdeckung im Wesentlichen ein Gehäuse bildet. Darüber hinaus weist die vordere Platte ein oberes Profil und ein unteres Profil auf, die derartig ausgebildet sind, dass die vordere Platte mittels des oberen und des unteren Profils und mittels des ersten Stegs der oberen Abdeckung und des zweiten Stegs der unteren Abdeckung der Haltevorrichtung auf die Haltevorrichtung aufschiebbar ist. Durch die entsprechende passgenaue Fertigung der entsprechenden Profile bzw. Stege an der vorderen Platte bzw. der oberen bzw. unteren Abdeckung ist ein leichtgängiges Aufschieben der vorderen Platte auf die Haltevorrichtung möglich, wodurch im Wesentlichen ein Gehäuse entsteht. Bei Bedarf kann dieses durch Ergänzung einfach herzustellender Stanzteile auf den beiden Stirnseiten zu einem vollständigen Gehäuse erweitert werden, welches die im Inneren des so gebildeten Gehäuses befindlichen, in das Profil eingehängten und an der Befestigungsschiene fixierten Geräte nicht nur vor Witterungseinflüssen, beispielsweise Feuchtigkeit und Staub, sondern auch insbesondere gegen Störeinflüsse elektrischer bzw. magnetischer Art wirksam schützt und somit eine hohe elektromagnetische Verträglichkeit (EMV) sowie einen hohen Schutz vor elektrostatischer Entladung (ESD) bietet. Darüber hinaus können zur Ableitung solcher Störsignale sogenannte EMV-Federn mittels der Befestigungsvorrichtungen mit der Haltevorrichtung kontaktiert und somit nach außen abgeleitet werden.

Weiterhin ist die obere Platte zu Wartungszwecken entsprechend einfach und bequem durch Wegschieben zu entfernen, um rasch an die zu überprüfenden Geräte zu gelangen. Durch das zur Herstellung der Haltevorrichtung zu verwendende Material, beispielsweise Aluminium, lassen sich weitere Vorteile erreichen. Insbesondere durch die hohe thermische Leitfähigkeit von Aluminium kann die gesamte Haltevorrichtung einschließlich der oberen Platte als Kühlkörper zur Ableitung hoher Bauteil-/Gerätetemperaturen verwendet werden. Durch die Verlagerung dieser physikalischen Eigenschaften wie z.B. hohe thermische Leitfähigkeit, Schutz gegen EMV-Strahlung sowie Schutz vor elektrostatischer Entladung (ESD), Berührungsschutz sowie Schutz vor Witterungseinflüssen in ein kostengünstig herstellbares Aluminiumstrangpressprofil, kann das eigentliche Gehäuse der, in die Haltevorrichtung einzuhängenden Geräte, die die einzelnen Baugruppen beinhalten, sich auf entsprechend preisgünstiges Material und eine sehr einfache Ausführungsform beschränken, welche nur noch die Halterung der Baugruppen selbst umfasst.

Die Aufgabe der vorliegenden Erfindung wird ebenfalls durch ein Gerät mit den Merkmalen des unabhängigen Anspruchs 14 gelöst.

Nach einer weiteren bevorzugten Ausführungsform der Erfindung ragt der Gerätesteg aus der betreffenden Seitenebene des Geräts heraus. Des Weiteren ragt die Befestigungsvorrichtung aus der betreffenden Seitenebene des Geräts heraus und ist im Wesentlichen würfelförmig ausgestaltet, wobei die Befestigungsvorrichtung zur Aufnahme eines Befestigungsmittels ausgestaltet ist. Darüber hinaus ist es von besonderem Vorteil, dass der Gerätesteg und die Befestigungsvorrichtung an gegenüber liegenden Seiten des Geräts angeordnet sind. Durch die erfindungsgemäße Ausgestaltung des Geräts mit einem Gerätesteg und einer, insbesondere auf der gegenüber liegenden Seite des Geräts befindlichen Befestigungsvorrichtung, ist es ohne großen Aufwand auch für einen Nichttechniker sehr leicht möglich, ein Gerät in ein zur Aufnahme des Geräts vorbereitetes Profil einzuhängen und mittels handelsüblicher Befestigungsmittel, durch eine vorteilhafte Aussparung in der Befestigungsvorrichtung des Geräts an einer Befestigungsschiene mit einfachem Werkzeug zu befestigen. Der Gerätesteg weist beispielsweise im Wesentlichen einen quadratischen Querschnitt auf. Selbstverständlich sind auch beliebige andere Querschnitte und Formen für den Gerätesteg möglich. Durch die besonders vorteilhafte Ausführung und Lage des Gerätestegs liegt der Schwerpunkt des Geräts, insbesondere bei der Einführung des Gerätestegs in ein dafür vorgesehenes Profil so zur Einführungsstelle, also zum Drehpunkt, um den das Gerät nach unten geklappt wird, dass das Gerät automatisch an eine dafür vorgesehene Befestigungsschiene klappt und in dieser Position verharrt, so dass das Fixieren des Geräts entsprechend ohne manuelles Festhalten ermöglicht und damit die Montage des Geräts wesentlich erleichtert wird. Bei einem Störfall ist umgekehrt sehr schnell ein Entfernen des betroffenen Geräts zu bewerkstelligen. Besonders vorteilhaft ist es beispielsweise, die Ausstattung eines Geräts mit zwei Befestigungsvorrichtungen, die jeweils an einem und am anderen Ende der betreffenden Seite angebracht sind, da dadurch eine besonders stabile Lage des Geräts erreicht werden kann.

Nach einer besonders vorteilhaften Ausführungsform der Erfindung weist das Gerät wenigstens eine obere Steckverbindung auf, welche an der Seite des Geräts angeordnet ist, an der der Gerätesteg angeordnet ist und/oder eine untere Steckverbindung, welche an der Seite des Geräts angeordnet ist, an der die Befestigungsvorrichtung angeordnet ist. Durch eine solche Anordnung bzw. Ausstattung eines Geräts mit einer oberen und/oder unteren Steckverbindung, ist das Gerät optimal zur Einführung in eine entsprechende erfindungsgemäße Haltevorrichtung vorbereitet, da dadurch der Zugang zum oberen Kanal bzw. zum unteren Kanal der Haltevorrichtung ideal gewährleistet ist und nur minimale Kabelwege zurückgelegt werden müssen. Auch die Verbindung der Kabel mit dem Gerät selbst ist durch eine solche vorbereitete obere und/oder untere Steckverbindung sehr schnell und sehr einfach möglich, wodurch eine entsprechende Zeitersparnis beim Ein- bzw. Ausbau und dem Zusammenbau solcher Baugruppen gewährleistet ist. Selbstverständlich ist es darüber hinaus möglich das Gerät so auszugestalten, dass es weder eine obere noch eine untere Steckverbindung, sondern lediglich eine oder mehrere seitliche Steckverbindungen aufweist.

Nach einer weiteren bevorzugten Ausführungsform der Erfindung weist das Gerät wenigstens eine erste seitliche Steckverbindung auf, welche an einer der Seiten des Geräts senkrecht zur Seite mit dem Gerätesteg angeordnet ist. Darüber hinaus ist es äußerst vorteilhaft, dass die seitliche Steckverbindung zur direkten Kopplung mit einem weiteren Gerät vorgesehen ist. Es ist selbstverständlich möglich, dass das Gerät mehrere seitliche Steckverbindungen auf unterschiedlichen Seiten des Geräts aufweist. Insbesondere ist es von Vorteil, wenn die seitlichen Steckverbindungen an den Seiten des Geräts angeordnet sind, die sich nach dem Einhängen des Geräts in eine erfindungsgemäße Haltevorrichtung senkrecht zur Platte befinden, da dadurch beliebige weitere Geräte rechts bzw. links vom eingehängten Gerät in die Haltevorrichtung eingehängt und mittels der seitlichen Steckverbindungen schnell und einfach direkt miteinander gekoppelt werden können. Dies wird insbesondere dadurch ermöglicht, dass die Haltevorrichtung eine genau definierte Lage der Geräte zueinander gewährleistet und somit elektrische Verbindungen zwischen den einzelnen Geräten bzw. Baugruppen untereinander ohne aufwändige zusätzliche Busbaugruppen bzw. Verbindungskabel realisiert werden können. Auf zusätzliche Busleitungen bzw. andere stromführende Kabel zwischen den Geräten kann somit vollständig verzichtet werden. Darüber hinaus können Geräte im Fehlerfall sehr einfach und schnell aus dem Verbund herausgelöst und ersetzt werden.

Nach einer weiteren vorteilhaften Ausführungsform der Erfindung weist das Gerät wenigstens ein erstes Signalmittel auf, über welches Informationen über den aktuellen Betriebszustand des Geräts anzeigbar sind. Besonders vorteilhaft ist es, dass als Signalmittel eine Leuchtdiode vorgesehen ist. Durch solche Signalmittel, die beispielsweise auch als akustische Signalmittel, z.B. Alarmmelder, ausgeführt sein können, ist es sehr leicht möglich, Informationen über den aktuellen Betriebszustand des Geräts zu signalisieren und somit im Falle eines Fehlers das entsprechende defekte Gerät zu identifizieren und auszutauschen. Des Weiteren sind natürlich beliebige weitere Signalmittel bzw. die Anzeige beliebiger weiterer Informationen über beispielsweise den aktuellen Betriebszustand des Gerätes möglich und denkbar. So ist beispielsweise auch eine digitale Anzeige von Betriebszuständen möglich. Darüber hinaus ist es auch möglich, dass das Gerät alternativ oder zusätzlich zu dem/den Signalmitteln ein oder mehrere Bedienelemente, wie beispielsweise Tastatur, Schalter, etc. aufweist, wodurch eine separate, individuelle Kontrolle bzw. Ansteuerung der im Gerät befindlichen Baugruppen möglich ist.

Des Weiteren ist es auch möglich das Gerät zusätzlich mit Be- bzw. Entlüftungsöffnungen zu versehen. Bevorzugt werden die Seiten des Geräts, die mit der oberen bzw. der unteren Steckverbindung versehen sind, mit den Be- bzw. Entlüftungsöffnungen ausgestaltet, da dadurch eine entsprechende Luftzirkulation über den oberen bzw. unteren Kanal erfolgt. Das Gerät kann jedoch auch an beliebigen anderen Seiten mit Be- bzw. Entlüftungsöffnungen ausgestaltet werden.

Im Weiteren werden bevorzugte Ausführungsbeispiele der Erfindung mit Bezugnahme auf die Zeichnungen näher erläutert. Es zeigen:
- FIG 1: eine beispielhafte Ausführungsform einer erfindungsgemäßen Haltevorrichtung,
- FIG 2: eine beispielhafte Ausführungsform eines erfindungsgemäßen Geräts,
- FIG 3: eine beispielhafte Ausführungsform der erfindungsgemäßen Haltevorrichtung mit eingehängtem Gerät und aufschiebbarer oberer Platte,
- FIG 4: das Einhängen einer beispielhaften Ausführungsform eines erfindungsgemäßen Geräts in die Haltevorrichtung,
- FIG 5: die Lage des Geräts nach dem Einhängen in die Haltevorrichtung und
- FIG 6: die Haltevorrichtung nach dem Einhängen von beispielsweise zwei erfindungsgemäßen Ausführungsformen von Geräten.

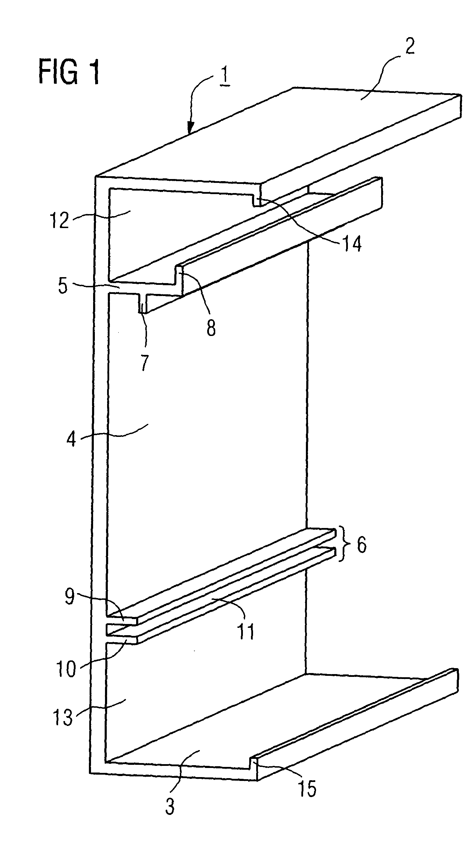

FIG 1 zeigt eine beispielhafte Ausführungsform einer erfindungsgemäßen Haltevorrichtung 1. Die beispielhafte Haltevorrichtung 1 besteht aus einer Platte 4, einer oberen Abdeckung 2, einer unteren Abdeckung 3, einem Profil, bestehend aus einem Profilteil 5 sowie einem ersten 7 und einem zweiten Profilsteg 8, und einer Befestigungsschiene 6. Die vorliegende Ausführungsform der Haltevorrichtung 1 ist beispielsweise einstückig als Aluminiumstrangpressprofil ausgeführt. Selbstverständlich ist es möglich, die einzelnen Bestandteile separat zu fertigen und unter Verwendung verschiedenster Techniken, z.B. Schweißen, Kleben, etc. miteinander zu der gezeigten Form der Haltevorrichtung 1 zu verbinden. Die obere Abdeckung 2 ist dabei mit einem Ende mit der Platte 4 verbunden. Die untere Abdeckung 3 ist ebenfalls mit einem Ende mit der Platte 4 verbunden. Die obere 2 sowie die untere Abdeckung 3 sind im gezeigten Beispiel jeweils rechtwinklig mit der Platte 4 verbunden und abgewinkelt ausgebildet. Es ist darüber hinaus selbstverständlich auch möglich und denkbar, dass je nach Anwendung die obere 2 und die untere Abdeckung 3 von der gezeigten rechtwinkligen Anordnung abweichen und andere, insbesondere auch unterschiedliche Winkel zur Platte 4 einnehmen und entsprechend diesen Winkeln mit der Platte 4 verbunden sind.

Darüber hinaus weist die obere Abdeckung 2 einen Steg 14 auf, der im Wesentlichen senkrecht zur oberen Abdeckung 2, im Wesentlichen parallel zur Platte 4 in Richtung auf die untere Abdeckung 3 zeigt. Der Steg 14 ist dabei an dem Ende der oberen Abdeckung 2 angeordnet, welches nicht mit der Platte 4 verbunden ist. Der gezeigte Steg 14 ist im Beispiel wiederum rechtwinklig zur oberen Abdeckung 2 angeordnet. Ein Abweichen von der rechtwinkligen Anordnung ist auch hier je nach Anwendungszweck beliebig möglich. Analoges gilt für die untere Abdeckung 3, die einen Steg 15 aufweist, der ebenfalls im Wesentlichen senkrecht zur unteren Abdeckung 3, im Wesentlichen parallel zur Platte 4 in Richtung auf die obere Abdeckung 2 zeigt und an dem Ende der unteren Abdeckung 3 angeordnet ist, welches nicht mit der Platte 4 verbunden ist.

Die in der FIG 1 gezeigte Haltevorrichtung 1 weist darüber hinaus ein Profil 5 auf, welches in der oberen Hälfte der Platte 4 mit der Platte 4 parallel zur oberen Abdeckung 2 verbunden ist. Das Profil 5 ist rechtwinklig ausgebildet und weist im gezeigten Beispiel zwei Profilstege auf, einen ersten Profilsteg 7, der parallel zur Platte 4 in Richtung auf die untere Abdeckung 3, sowie einen zweiten Profilsteg 8, der parallel zur Platte 4 in Richtung auf die obere Abdeckung 2 zeigt. Der zweite Profilsteg 8 ist dabei an dem Ende des Profils 5 angebracht, welches nicht mit der Platte 4 verbunden ist. Der erste Profilsteg 7 befindet sich am Profil 5 zwischen der Platte 4 und dem zweiten Profilsteg 8. Hierbei sind selbstverständlich sämtliche Positionen am Profil 5 für beide Profilstege 7 und 8 denkbar. Begrenzt durch die Platte 4, durch die obere Abdeckung 2 sowie durch das Profil 5 mit dem zweiten Profilsteg 8, ergibt sich ein oberer Kanal 12, der insbesondere zur Aufnahme von Kabeln geeignet ist. Von besonderem Vorteil ist dabei, dass der zweite Profilsteg 8 am Ende des Profils 5 angebracht ist, da dadurch der obere Kanal 12 größtmögliche Ausmaße annimmt und damit einen entsprechend größeren Raum zur Aufnahme von Kabel aufweist.

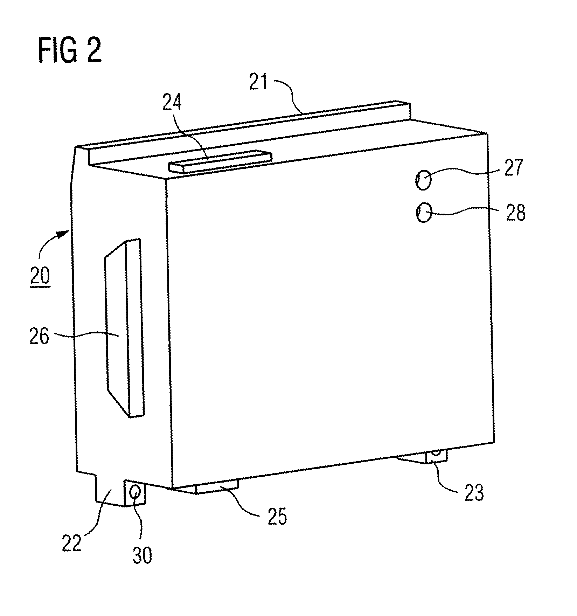

Weiterhin entsteht durch den ersten Profilsteg 7, der sich ebenfalls am Profil 5 befindet, zwischen der Platte 4 und dem Profilsteg 7 ein Zwischenraum, der sich im gezeigten Beispiel aufgrund der Einstückigkeit des Profils 5 quer über die ganze Platte 4 erstreckt und zum Einführen eines entsprechend dimensionierten Gegenstegs vorbereitet ist. Ein solcher Gegensteg ist, wie in der FIG 2 dargestellt, beispielsweise an einem Gerät 20 als Gerätesteg 21 realisiert, wobei das Gerät 20 mittels eines solchen Gerätestegs 21 in diesen Zwischenraum eingeführt werden kann.

Darüber hinaus weist die Haltevorrichtung 1 eine Befestigungsschiene 6 auf, die in der unteren Hälfte der Platte 4 mit der Platte 4 verbunden ist und parallel zur unteren Abdeckung 3 sich über die gesamte Breite der Platte 4 erstreckt. Die Befestigungsschiene 6 besteht aus zwei mit einem Abstand 11 zueinander parallelen Schienen 9 und 10, wobei der Abstand 11 vorteilhafterweise so dimensioniert ist, dass er zur Aufnahme handelsüblicher Befestigungsmittel, z.B. Schrauben, geeignet ist. Die Befestigungsschiene 6 ist somit zur Fixierung eines Geräts, welches in die Haltevorrichtung 1 mittels des Profils 5 eingeführt wird, entsprechend vorbereitet. Dabei kann der Abstand zwischen dem Profil 5 und der Befestigungsschiene 6 je nach Bedarf, d.h. je nach Größe des einzuhängenden Geräts, entsprechend berücksichtigt werden. Durch die Platte 4, die untere Abdeckung 3 sowie ein an der Befestigungsschiene 6 befestigtes bzw. fixiertes Gerät entsteht somit ein unterer Kanal 13, der analog zum Kanal 12 zur Aufnahme von Kabeln geeignet ist.

FIG 2 zeigt eine beispielhafte Ausführungsform eines erfindungsgemäßen Geräts 20. Die in der FIG 2 gezeigte beispielhafte Ausführungsform eines Geräts 20, insbesondere elektrisches Gerät, ist im Wesentlichen quaderförmig ausgestaltet.

Das Gerät 20 weist auf einer Seite einen Gerätesteg 21 auf, der an einem Ende der betreffenden Seite des Geräts 20 angebracht ist und sich beispielsweise über die gesamte Breite des Geräts erstreckt. Der Gerätesteg 21 ragt aus der betreffenden Seitenebene des Geräts 20 heraus, weist beispielsweise im Wesentlichen einen quadratischen Querschnitt auf und ist zur Einführung in ein Profil 5 beispielsweise der Haltevorrichtung 1 aus FIG 1 geeignet und vorgesehen. Selbstverständlich sind auch beliebige andere Querschnitte und Formen für den Gerätesteg 21 möglich. Es ist darüber hinaus auch denkbar, dass der Gerätesteg 21 aus mehreren gleichgeformten Teilen besteht, die über die Seitenbreite des Geräts 20 verteilt sind, sodass sich der Gerätesteg 21 nicht durchgängig über die ganze Breite einer Seite des Geräts 20 erstreckt.

Des Weiteren weist das Gerät 20 Befestigungsvorrichtungen 22 und 23 auf, die sich auf der Seite des Geräts 20 befinden, die dem Gerätesteg 21 gegenüberliegt und von denen die Befestigungsvorrichtung 22 an dem einen seitlichen Rand der betreffenden Seite und die Befestigungsvorrichtung 23 am anderen seitlichen Rand der betreffenden Seite des Geräts 20 angeordnet ist. Selbstverständlich ist es auch denkbar und möglich, ein Gerät 20 mit nur einer bzw. auch mit mehr als zwei Befestigungsvorrichtungen 22, 23 auszustatten. Auch die Positionen der Befestigungsvorrichtungen 22, 23, die in der FIG 2 gezeigt sind, sind lediglich beispielhaft und können selbstverständlich beliebig variiert werden. Die Positionen am Rand der Seite sind jedoch besonders vorteilhaft, da dadurch eine besonders stabile Position des Geräts im fixierten Zustand erreicht wird.

Die gezeigten beispielhaften Befestigungsvorrichtungen 22 bzw. 23 ragen aus der betreffenden Seitenebene des Geräts 20 heraus und sind würfelförmig ausgestaltet, wobei die Befestigungsvorrichtungen 22 und 23 zur Aufnahme eines Befestigungsmittels ausgestaltet sind, was beispielhaft an der Aussparung 30 angedeutet wird. Eine solche Aussparung 30 ist vorteilhafterweise so dimensioniert, dass sie zur Aufnahme handelsüblicher Befestigungsmittel, insbesondere Schrauben, geeignet ist. Die Form der Befestigungsvorrichtung kann selbstverständlich beliebig ausgeführt werden. Mit Hilfe der Befestigungsvorrichtungen 22 und 23 ist das Gerät 20 beispielsweise an einer Befestigungsschiene 6 der in der FIG 1 gezeigten Haltevorrichtung 1 anschraub- bzw. fixierbar. Besonders vorteilhaft ist es, dass der Gerätesteg 21 und die Befestigungsvorrichtungen 22 und 23 an gegenüberliegenden Seiten des Geräts 20 angeordnet sind, da dadurch eine besonders stabile Position des Geräts nach dem Einhängen und Fixieren in einer gemäß FIG 1 gezeigten Haltevorrichtung 1 gewährleistet ist.

Des Weiteren weist das Gerät 20 beispielhaft eine obere Steckverbindung 24 sowie eine untere Steckverbindung 25 sowie eine seitliche Steckverbindung 26 auf, wobei eine weitere seitliche Steckverbindung analog zur Position der seitlichen Steckverbindung 26 auf deren gegenüberliegenden Seite aus der dargestellten Perspektive nicht einsehbar ist. Die obere Steckverbindung 24 ist insbesondere vorteilhafterweise an der Seite des Geräts 20 angeordnet, an der auch der Gerätesteg 21 angeordnet ist, da im Hinblick auf das Einhängen und Befestigen des Geräts 20 in eine Haltevorrichtung 1 gemäß FIG 1 der Zugang zu einem entsprechenden oberen Kanal 12 dann sehr leicht möglich ist. Analoges gilt für die Position der unteren Steckverbindung 25, die vorteilhafterweise an der Seite des Geräts angeordnet ist, an der auch die Befestigungsvorrichtungen 22 und 23 angeordnet sind. Dadurch ist der untere Kanal 13 der Haltevorrichtung 1 der FIG 1 ebenfalls leicht zugänglich. Durch die zwei getrennten oberen 24 und unteren Steckverbindungen 25 kann ein Anschluss entsprechender Kabel an das Gerät 20 nach bestimmten Kriterien getrennt erfolgen. So können insbesondere störbehaftete Kabel, z.B. die Stromversorgung mittels der unteren Steckverbindung 25 an das Gerät 20 angeschlossen werden, während beispielsweise Sensorund/oder Kommunikationskabel mittels der oberen Steckverbindung 24 an das Gerät 20 angeschlossen werden. Eine Trennung störbehafteter Kabel von sensitiven Kabeln ist so automatisch schnell und einfach zu realisieren.

Die seitliche Steckverbindung 26 bzw. die, sich auf der gegenüberliegenden Seite des Geräts 20 befindliche, nicht sichtbare weitere seitliche Steckverbindung sind insbesondere dazu vorgesehen, um weitere Geräte rechts bzw. links vom dargestellten Gerät 20 direkt anzuschließen, um auf eine kostenintensive und aufwändige Zwischenverkabelung zwischen den zu verbindenden bzw. zu koppelnden Geräten verzichten zu können. Die Form der gezeigten Steckverbindungen 24, 25, 26 ist selbstverständlich lediglich beispielhaft. Vorteilhafterweise können alle handelsüblich erhältlichen Steckverbindungen entsprechend in das Gerät 20 bzw. das Gehäuse des Geräts 20 an vorgesehenen bzw. gewünschten Positionen eingepasst bzw. eingebaut werden. Das gezeigte Gerät 20 kann insbesondere in verschiedenen Breiten hergestellt werden.

Des Weiteren weist das Gerät 20 Signalmittel 27 und 28 auf, über welche beispielsweise Informationen über den aktuellen Betriebszustand des Geräts angezeigt werden können. Die hier gezeigten Signalmittel 27 und 28 sind als Aussparungen im Gehäuse des Geräts 20 dargestellt und können beispielsweise als unterschiedlich farbige, aber auch als gleichfarbige Leuchtdioden ausgeführt sein, die zur Anzeige jeweils unterschiedlicher Funktionen vorgesehen sind. Die im Inneren des Geräts 20, aus Gründen der Übersichtlichkeit nicht dargestellten und für die vorliegende Erfindung nicht relevanten Baugruppen können somit entsprechende Informationen über deren Betriebszustände mittels der Signalmittel 27 und 28 nach außen signalisieren. Die Anzahl der gezeigten Signalmittel 27 und 28 ist selbstverständlich beispielhaft. So ist es durchaus denkbar, kein oder nur ein einziges Signalmittel 27, insbesondere Leuchtdiode, bzw. bei Bedarf beliebig viele Signalmittel am Gerät 20 entsprechend anzubringen. Die Anzeige bzw. Signalisierung von Informationen, insbesondere von Betriebszuständen der Geräte, die in der FIG 2 beispielhaft durch Verwendung optischer Signalmittel 27 und 28 realisiert ist, ist beispielsweise ebenfalls mittels akustischer Signalgeber oder anderer, alternativer Anzeigemittel, beispielsweise analoger oder digitaler LCD-Displays bzw. -Bausteine denkbar und möglich. Darüber hinaus ist es auch möglich, die Geräte alternativ oder zusätzlich zu dem/den Signalmitteln mit ein oder mehreren Bedienelementen, wie beispielsweise Tastatur, Schalter, etc. auszustatten, wodurch eine separate, individuelle Kontrolle bzw. Ansteuerung der in den Geräten befindlichen Baugruppen möglich ist.

Des Weiteren ist es auch möglich das Gerät 20 zusätzlich mit Be- bzw. Entlüftungsöffnungen zu versehen, die in der gezeigten Ausführungsform aus Gründen der Übersichtlichkeit nicht dargestellt sind. Bevorzugt werden die Seiten des Geräts 20, die mit der oberen 24 bzw. der unteren Steckverbindung 25 versehen sind, mit den Be- bzw. Entlüftungsöffnungen ausgestaltet, da dadurch eine entsprechende Luftzirkulation über den oberen 12 bzw. unteren Kanal 13 erfolgt. Das Gerät 20 kann jedoch auch an beliebigen anderen Seiten mit Be- bzw. Entlüftungsöffnungen ausgestaltet werden.

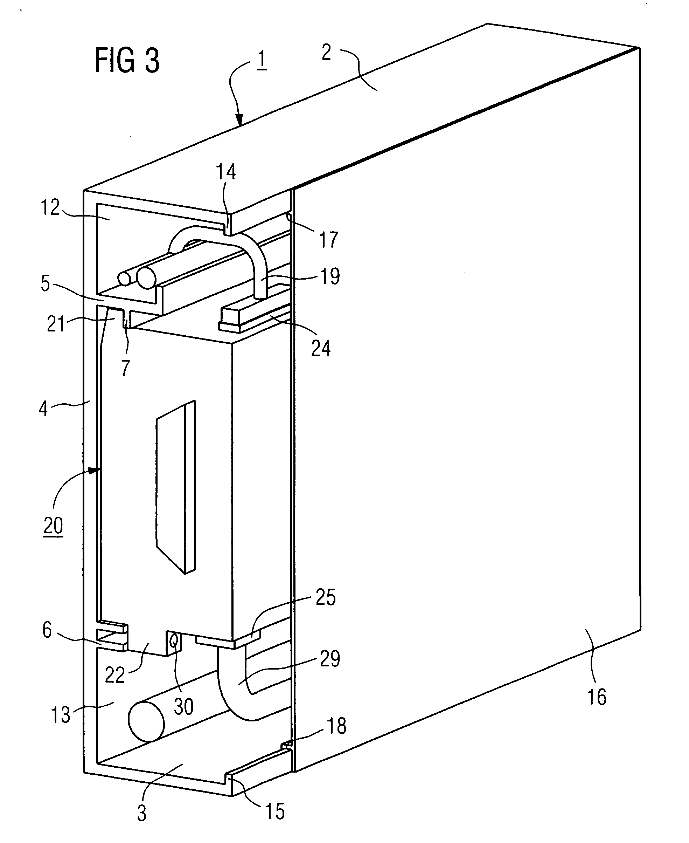

FIG 3 zeigt eine beispielhafte Ausführungsform der erfindungsgemäßen Haltevorrichtung 1 mit eingehängtem Gerät 20 und aufschiebbarer oberer Platte 16. Dabei ist das Gerät 20 mittels des Gerätestegs 21 in den Zwischenraum zwischen der Platte 4, dem Profil 5 und des ersten Profilstegs 7 gebildeten Zwischenraums eingeführt und mittels der Befestigungsvorrichtungen 22 und 23, welche in der gezeigten Perspektive der FIG 3 nicht sichtbar ist, an der Befestigungsschiene 6 fixiert. Die dazu nötigen Befestigungsmittel, beispielsweise Schrauben, etc., welche durch die Aussparung 30 an der Befestigungsschiene 6 befestigt werden, ist aus Gründen der Übersichtlichkeit nicht gezeigt.

Des Weiteren ist der obere Kanal 12, der durch die Platte 4, die obere Abdeckung 2 und das Profil 5 gebildet wird, sowie der untere Kanal 13, der durch die Platte 4, die untere Abdeckung 3 sowie das eingehängte Gerät 20 gebildet wird, dargestellt. Zusätzlich sind die, im oberen 12 und unteren Kanal 13 befindlichen Kabel, insbesondere Kabel 19 bzw. 29 dargestellt. Im unteren Kanal 13 sind dabei beispielhaft die störbehafteten Kabel, insbesondere Stromversorgungskabel, untergebracht, wobei zusätzlich der Anschluss des Kabels 29 an das Gerät 20 mittels der unteren Steckverbindung 25 gezeigt ist. Im oberen Kanal 12 werden die sensitiven Kabel, beispielsweise zur Datenkommunikation, geführt, wobei hier beispielhaft der Anschluss des Kabels 19 an das Gerät 20 mittels der oberen Steckverbindung 24 dargestellt ist.

Darüber hinaus ist die vordere Platte 16 dargestellt, die ein oberes Profil 17 sowie ein unteres Profil 18 aufweist, die derartig ausgebildet sind, dass die vordere Platte 16 mittels des oberen 17 und des unteren Profils 18 sowie mittels des ersten Stegs 14 der oberen Abdeckung 2 und des zweiten Stegs 15 der unteren Abdeckung 3 der Haltevorrichtung 1 auf die Haltevorrichtung 1 selbst aufschiebbar ist. Durch die entsprechende Ausgestaltung der Profile 17 und 18 ist dieses Aufschieben sehr leicht möglich, wodurch die Haltevorrichtung zusammen mit der vorderen Platte nach dem Aufschieben im Wesentlichen ein Gehäuse bildet. Auf die beiden verbleibenden offenen seitlichen Stirnseiten können bei Bedarf einfach herzustellende Stanzteile als Abschluss befestigt werden, welche in Verbindung mit der vorderen Platte 16 die Haltevorrichtung 1 zu einem vollständigen Gehäuse ergänzen. Eine weitere vorteilhafte Ausgestaltung ist darüber hinaus beispielsweise auch die direkte Anbindung der im oberen (12) bzw. unteren Kanal (13) liegenden Kabel an links und rechts vom Gerät 20 bzw. Haltevorrichtung 1 befindliche, senkrecht angeordnete weitere.

Durch ein auf diese Weise vollständiges Gehäuse sind die im Inneren befindlichen Geräte, insbesondere Gerät 20, sowie die entsprechenden Kabel, insbesondere für die Stromversorgung beispielsweise Kabel 29 bzw. für die Datenkommunikation, beispielsweise Kabel 19, vor Umgebungseinflüssen effektiv geschützt. Gleichzeitig ist bei Wartungsaktivitäten bzw. Ausfall des Geräts 20 ein Abnehmen der vorderen Platte 16 sehr leicht möglich, wodurch ein schneller und einfacher Zugang zu den eingehängten Geräten, insbesondere Gerät 20, gewährleistet ist.

Durch Verwendung entsprechender Materialien sowohl für die Haltevorrichtung 1 als auch für die vordere Platte 16, beispielsweise Aluminium, welches eine hohe thermische Leitfähigkeit aufweist, kann das so gebildete Gehäuse als Ganzes als Kühlkörper zur Ableitung hoher Bauteil- bzw. Gerätetemperaturen, insbesondere des Geräts 20, verwendet werden. Darüber hinaus bietet das so geformte Gehäuse eine geschlossene Einheit, die neben Schutz vor Witterungseinflüssen, bzw. weiterer Umwelteinflüsse, z.B. Feuchtigkeit und Staub, auch einen hohen EMV- und ESD-Schutz. So können beispielsweise zur Ableitung von Störsignalen sogenannte EMV-Federn von den Befestigungsmitteln, mit denen das Gerät 20 an der Befestigungsschiene 6 der Haltevorrichtung 1 befestigt ist, mit der Befestigungsschiene 6 kontaktiert und somit abgeleitet werden. Durch die Verlagerung physikalischer Eigenschaften wie beispielsweise thermische Leitfähigkeit, Schutz gegen EMV-Strahlung sowie elektrostatischen Berührungsschutz auf die beispielsweise als Aluminiumstrangpressprofil einteilig kostengünstig herstellbare Haltevorrichtung 1 ist das Gehäuse des Geräts 20 selbst durch preisgünstige Teile herstellbar und umfasst neben den aufgezeigten Steckverbindungen bzw. Befestigungsmitteln bzw. dem Gerätesteg nur noch die Halterung der im Inneren des Geräts 20 befindlichen Baugruppen selbst.

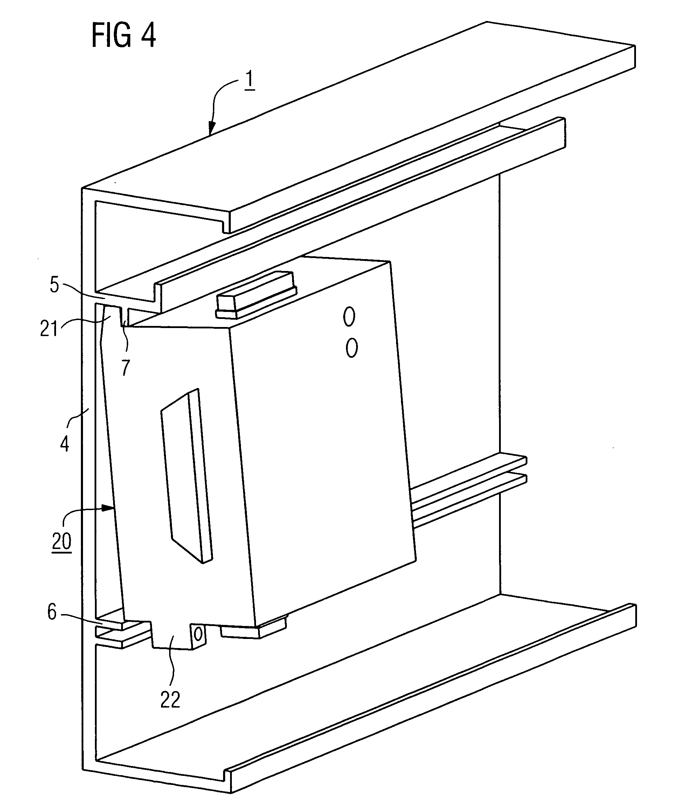

FIG 4 zeigt das Einhängen einer beispielhaften Ausführungsform eines erfindungsgemäßen Geräts 20 in die Haltevorrichtung 1. Dabei wird das Gerät 20 schräg von unten mit dem Gerätesteg 21 in den Zwischenraum zwischen der Platte 4 und dem ersten Profilsteg 7 des Profils 5 eingeführt und nach unten abgeklappt, so dass die Befestigungsvorrichtung 22 sowie die in der FIG 4 nicht sichtbare Befestigungsvorrichtung 23 auf der Befestigungsschiene 6 zum Aufliegen kommt. Vorteilhafterweise ist der Gerätesteg 21, auf der Seite des Geräts 20, die der Platte 4 am nächsten liegt, abgeschrägt, um das Gerät 20 leichter in die Haltevorrichtung 1 einführen zu können. Durch die besonders vorteilhafte Ausführung und Lage des Gerätestegs 21 liegt der Schwerpunkt des Geräts 20, insbesondere bei der Einführung des Gerätestegs 21 in den Zwischenraum zwischen der Platte 4 und dem ersten Profilsteg 7 des Profils 5 so zur Einführungsstelle, also zum Drehpunkt, um den das Gerät 20 nach unten geklappt wird, dass das Gerät automatisch an die Befestigungsschiene 6 klappt und in dieser Position verharrt, so dass das Fixieren des Geräts 20 entsprechend ohne manuelles Festhalten ermöglicht und damit die Montage wesentlich erleichtert wird.

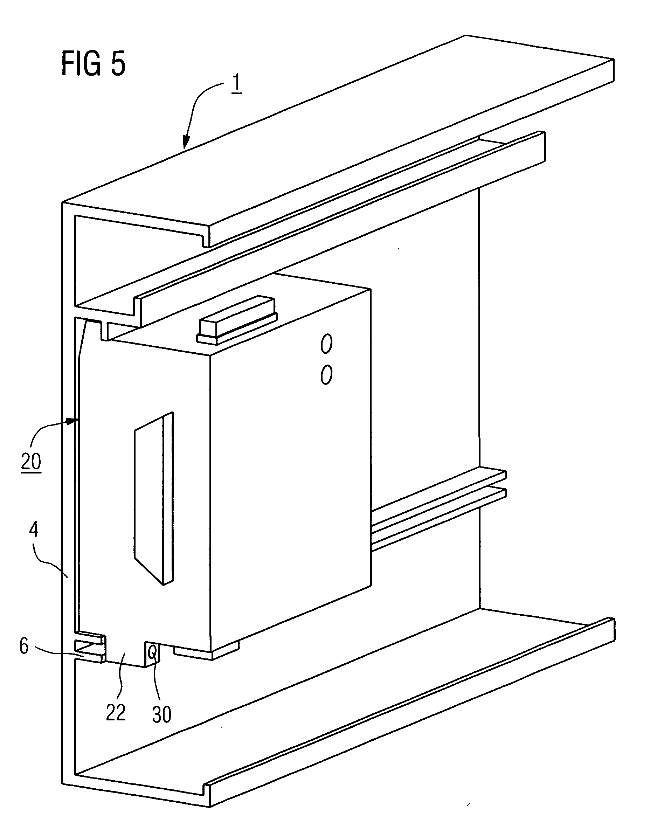

FIG 5 zeigt die Lage des Geräts nach dem Einhängen in die Haltevorrichtung 1. Liegt das Gerät 20 an der Platte 4 bzw. mit der Befestigungsvorrichtung 22 und der in der FIG 5 nicht sichtbaren Befestigungsvorrichtung 23 auf der Befestigungsschiene 6 auf, wird das Gerät 20 mittels handelsüblicher Befestigungsmittel, insbesondere Schrauben, mittels Aussparung 30 mit der Befestigungsschiene 6 befestigt, d.h. die Schrauben werden in die Befestigungsschiene 6 eingeschraubt. Bevorzugterweise befindet sich zwischen der Befestigungsschiene 6 und der Befestigungsvorrichtung 22 bzw. 23, die vorteilhafterweise aus Kunststoff ausgeführt sind, ein in der FIG 4 aus Übersichtlichkeitsgründen nicht dargestelltes EMV-Ableitblech, das beim Fixieren des Geräts 20 eine sichere Ableitung von Störsignalen auf die Haltevorrichtung 1, die beispielsweise aus Aluminium gefertigt ist, gewährleistet.

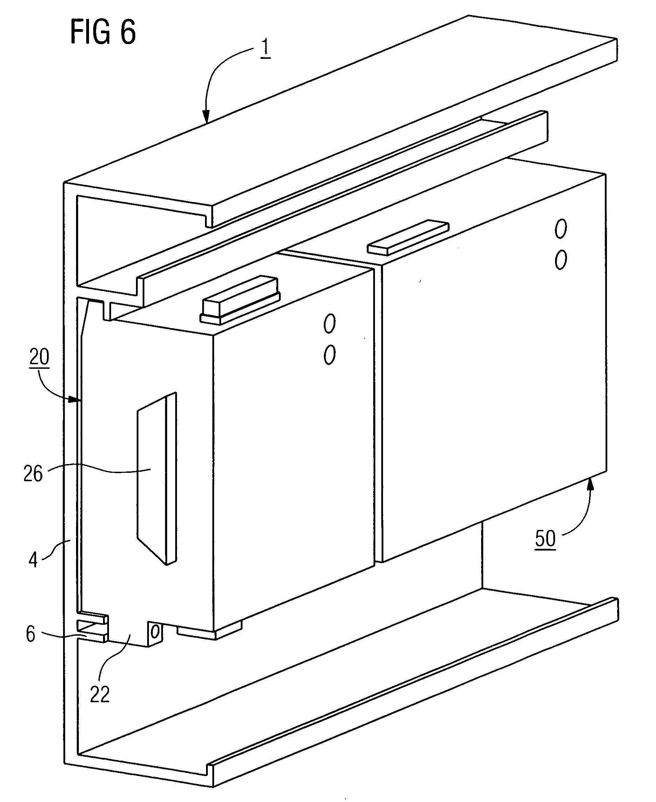

FIG 6 zeigt die Haltevorrichtung 1 nach dem Einhängen von beispielsweise zwei erfindungsgemäßen Ausführungsformen von Geräten, Gerät 20 und Gerät 50. Gerät 20 und Gerät 50 sind beispielsweise unterschiedlich breit. Dabei wird das Gerät 20 gemäß den Figurenbeschreibungen der Figuren 4 und 5 in die Haltevorrichtung 1 eingeführt und fixiert. Das Gerät 50 wird auf die gleiche Art und Weise in die Haltevorrichtung 1 eingeführt, zunächst nach links geschoben und mittels einer seitlichen Steckverbindung mit dem Gerät 20 direkt verbunden. Diese seitliche Steckverbindung ist in der Seite des Geräts 20 angeordnet, die der Seite des Geräts 20, die die seitliche Steckverbindung 26 enthält gegenüber liegt und in der FIG 6 nicht sichtbar ist. Das Gerät 50 wird anschließend entsprechend der Figurenbeschreibung der FIG 5 an der Befestigungsschiene 6 der Haltevorrichtung 1 fixiert. Somit können je nach Breite der Haltevorrichtung 1 eine beliebige Anzahl von Geräten nebeneinander mit direkter Verbindung untereinander in eine solche erfindungsgemäße Haltevorrichtung 1 eingeführt befestigt und an die entsprechende Einsatzstelle gebracht werden. Die beispielsweise auf die benötigte Länge absägbare Haltevorrichtung 1 kann dabei an beliebigen Flächen befestigt werden.

Zusammengefasst betrifft die vorliegende Erfindung eine Haltevorrichtung 1, ein Gerät 20 sowie ein Montagesystem für Geräte, auch mit höherem Gewicht, bei dem die einzelnen Teile mit einfachem Werkzeug befestigt werden können. Dabei werden die Geräte 20, 50 in eine Haltevorrichtung 1 eingehängt und mittels Befestigungsmittel an der Haltevorrichtung 1 fixiert. Die Haltevorrichtung 1 weist dabei zwei integrierte Kabelkanäle 12, 13 auf, wodurch störbehaftete Kabel, wie z.B. Stromversorgungskabel getrennt von sensitiven Kabeln, beispielsweise Datenübertragungskabel, verlegt und vor Umwelteinflüssen geschützt werden können. Dazu ist die Haltevorrichtung 1 mit einer vorderen Platte 6, als Deckel zu versehen. Die Gestaltung der Haltevorrichtung 1 mit vorderer Platte 6 als geschlossene Einheit, weist neben einer hohen Schutzfunktion gegen Umwelt- bzw. Witterungsverhältnisse, insbesondere Feuchtigkeit und Staub, zusätzlich einen hohen EMV- und ESD-Schutz auf. Durch die erfindungsgemäße Anordnung der Geräte 20, 50 nebeneinander in der Haltevorrichtung 1 mit genau definierter Lage können elektrische Verbindungen bzw. Kopplungen der einzelnen Geräte 20, 50 untereinander in einfacher Weise durch seitlich angeordnete Stecker 26 hergestellt werden. Baugruppen im Inneren der Geräte 20, 50, können somit ohne zusätzliche Busleitungen bzw. Busbaugruppen direkt miteinander verbunden werden.

## Patentansprüche

1. Haltevorrichtung (1) für wenigstens ein Gerät (20), insbesondere elektrisches Gerät, wobei die Haltevorrichtung (1) im Wesentlichen mindestens aus einer Platte (4) besteht, wobei die Haltevorrichtung (1) in einer ersten Hälfte der Platte (4) ein Profil (5,7,8), welches senkrecht zur Platte (4) angeordnet ist und in einer zweiten Hälfte der Platte (4) eine Befestigungsschiene (6), welche senkrecht zur Platte (4) angeordnet ist, aufweist, wobei das Profil (5,7,8) zur Einhängung des Geräts (20) und die Befestigungsschiene (6) zur Fixierung des Geräts (20) vorgesehen ist,
**dadurch gekennzeichnet,**
**dass** das Profil (5,7,8) aus einem im Wesentlichen quaderförmigen Profilteil (5), welches mit der Platte (4) verbunden ist, aus einem ersten Profilsteg (7) und aus einem zweiten Profilsteg (8) besteht, wobei der erste (7) und der zweite Profilsteg (8) jeweils im Wesentlichen senkrecht zum quaderförmigen Profilteil (5) angeordnet sind, wobei der zweite Profilsteg (8) mit der, der Platte (4) abgewandten Seite des Profilteils (5) verbunden ist, und wobei der erste Profilsteg (7) zwischen der Seite des Profilteils (5), mit der das Profilteil (5) mit der Platte (4) verbunden ist und dem zweiten Profilsteg (7) mit dem Profilteil (5) verbunden ist, und wobei der erste (7) und der zweite Profilsteg (8) an jeweils gegenüberliegenden Seiten des Profilteils (5) angeordnet sind.

2. Haltevorrichtung nach Anspruch 1,
**dadurch gekennzeichnet,**
**dass** die Haltevorrichtung (1) eine obere Abdeckung (2) und/oder eine untere Abdeckung (3) aufweist, wobei die obere (2) und/oder die untere Abdeckung (3) mit der Platte (4) verbunden sind.

3. Haltevorrichtung nach Anspruch 1,
**dadurch gekennzeichnet,**
**dass** der erste Profilsteg (7) im Wesentlichen parallel zur Platte (4) angeordnet ist.

4. Haltevorrichtung nach Anspruch 1,
**dadurch gekennzeichnet,**
**dass** der zweite Profilsteg (8) im Wesentlichen parallel zur Platte (4) angeordnet ist.

5. Haltevorrichtung nach einem der vorherigen Ansprüche,
**dadurch gekennzeichnet,**
**dass** das Profil (5,7,8) einstückig fertigbar ist.

6. Haltevorrichtung nach einem der vorherigen Ansprüche,
**dadurch gekennzeichnet,**
**dass** die Befestigungsschiene (6) aus zwei zueinander parallelen Schienen (9, 10) besteht, die mit einem Abstand (11) zueinander an der Platte (4) befestigt sind.

7. Haltevorrichtung nach einem der vorherigen Ansprüche,
**dadurch gekennzeichnet,**
**dass** die Haltevorrichtung (1) einen oberen Kanal (12) aufweist, der durch die obere Abdeckung (2), die Platte (4) und das Profil (5,7,8) gebildet wird.

8. Haltevorrichtung nach einem der vorherigen Ansprüche,
**dadurch gekennzeichnet,**
**dass** die Haltevorrichtung (1) einen unteren Kanal (13) aufweist, der durch die untere Abdeckung (3), die Platte (4) und das eingehängte Gerät (20) gebildet wird.

9. Haltevorrichtung nach einem der vorherigen Ansprüche,
**dadurch gekennzeichnet,**
**dass** der obere Kanal (12) und der untere Kanal (13) jeweils als kabelführende Kanäle nutzbar sind.

10. Haltevorrichtung nach einem der vorherigen Ansprüche,
**dadurch gekennzeichnet,**
**dass** die obere Abdeckung (2) und die untere Abdeckung (3) jeweils abgewinkelt ausgebildet sind, wobei die obere Abdeckung (2) einen ersten Steg (14) aufweist, der im Wesentlichen senkrecht zur oberen Abdeckung (2), im Wesentlichen parallel zur Platte (4) in Richtung auf die untere Abdeckung (3) zeigt und an dem Ende der oberen Abdeckung (2) angeordnet ist, welches nicht mit der Platte (4) verbunden ist und wobei die untere Abdeckung (3) einen zweiten Steg (15) aufweist, der im Wesentlichen senkrecht zur unteren Abdeckung (2), im Wesentlichen parallel zur Platte (4) in Richtung auf die obere Abdeckung (2) zeigt und an dem Ende der unteren Abdeckung (3) angeordnet ist, welches nicht mit der Platte (4) verbunden ist.

11. Haltevorrichtung nach einem der vorherigen Ansprüche,
**dadurch gekennzeichnet,**
**dass** die Haltevorrichtung (1) einstückig als Aluminiumstrangpressprofil ausführbar ist.

12. Haltevorrichtung nach einem der vorherigen Ansprüche,
**dadurch gekennzeichnet,**
**dass** die Haltevorrichtung (1) eine vordere Platte (16) aufweist, die zusammen mit der Platte (4) und der oberen (2) und der unteren Abdeckung (3) im Wesentlichen ein Gehäuse bildet.

13. Haltevorrichtung nach einem der vorherigen Ansprüche,
**dadurch gekennzeichnet,**
**dass** die vordere Platte (16) ein oberes Profil (17) und ein unteres Profil (18) aufweist, die derartig ausgebildet sind, dass die vordere Platte (16) mittels des oberen (17) und des unteren Profils (18) und mittels des ersten Stegs (14) der oberen Abdeckung (2) und des zweiten Stegs (15) der unteren Abdeckung (3) der Haltevorrichtung (1) auf die Haltevorrichtung (1) aufschiebbar ist.

14. Gerät (20), insbesondere elektrisches Gerät, welches im Wesentlichen quaderförmig ausgestaltet ist, zum Einhängen in eine Haltevorrichtung nach einem der Ansprüche 1 bis 13,
**dadurch gekennzeichnet,**
**dass** das Gerät (20) an wenigstens einer ersten Seite einen, entlang der gesamten Seite angeordneten Gerätesteg (21) aufweist, der zur Einführung in ein Profil (5,7,8) vorgesehen ist und der an einer zweiten Seite wenigstens eine Befestigungsvorrichtung (22) zur Befestigung des Geräts (20), insbesondere an einer Befestigungsschiene (6), aufweist.

15. Gerät nach Anspruch 14,
**dadurch gekennzeichnet,**
**dass** der Gerätesteg (21) aus der betreffenden Seitenebene des Geräts (20) herausragt.

16. Gerät nach einem der Ansprüche 14 oder 15,
**dadurch gekennzeichnet,**
**dass** die Befestigungsvorrichtung (22) aus der betreffenden Seitenebene des Geräts (20) herausragt und würfelförmig ausgestaltet ist, wobei die Befestigungsvorrichtung (22) zur Aufnahme eines Befestigungsmittels ausgestaltet ist.

17. Gerät nach einem der Ansprüche 14 bis 16,
**dadurch gekennzeichnet,**
**dass** der Gerätesteg (21) und die Befestigungsvorrichtung (22) an gegenüberliegenden Seiten des Geräts (20) angeordnet sind.

18. Gerät nach einem der Ansprüche 14 bis 17,
**dadurch gekennzeichnet,**
**dass** das Gerät (20) wenigstens eine obere Steckverbindung (24) aufweist, welche an der Seite des Geräts (20) angeordnet ist, an der der Gerätesteg (21) angeordnet ist und/oder eine untere Steckverbindung (25) aufweist, welche an der Seite des Geräts (20) angeordnet ist, an der die Befestigungsvorrichtung (22) angeordnet ist.

19. Gerät nach einem der Ansprüche 14 bis 18,
**dadurch gekennzeichnet,**
**dass** das Gerät (20) wenigstens eine erste seitliche Steckverbindung (26) aufweist, welche an eine der Seiten des Geräts (20) senkrecht zur Seite mit dem Gerätesteg (21) angeordnet ist.

20. Gerät nach einem der Ansprüche 14 bis 19,
**dadurch gekennzeichnet,**
**dass** das Gerät (20) wenigstens ein erstes Signalmittel (27) aufweist, über welches Informationen über den aktuellen Betriebszustand des Geräts (20) anzeigbar sind.

21. Gerät nach Anspruch 20,
**dadurch gekennzeichnet,**
**dass** als Signalmittel (27) eine Leuchtdiode vorgesehen ist.

22. Gerät nach einem der Ansprüche 14 bis 21,
**dadurch gekennzeichnet,**
**dass** die seitliche Steckverbindung (26) zur direkten Kopplung mit einem weiteren Gerät (50) vorgesehen ist.

23. System, bestehend aus einer Haltevorrichtung (1) nach einem der Ansprüche 1 bis 13 und wenigstens einem Gerät (20) nach einem der Ansprüche 14 bis 22.

24. System nach Anspruch 23, wobei das Gerät(20) mittels des Gerätestegs (21) in das Profil (5,7,8) der Haltevorrichtung (1) einführbar ist und mittels der Befestigungsvorrichtung (22) mittels Befestigungsmittel an der Befestigungsschiene (6) der Haltevorrichtung (1) fixierbar ist.
